(19) Europäisches Patentamt
European Patent Office
Office européen des brevets

(11) EP 1 134 071 B1

(12) **EUROPEAN PATENT SPECIFICATION**

(45) Date of publication and mention of the grant of the patent:
**28.06.2006 Bulletin 2006/26**

(51) Int Cl.:
***B29D 11/00*** *(2006.01)* ***B29C 71/00*** *(2006.01)*
***G02B 1/04*** *(2006.01)*

(21) Application number: **01105783.3**

(22) Date of filing: **08.03.2001**

(54) **Process for preparing ultraviolet-ray-absorbable and low water-containing soft contact lens**

Verfahren zur Herstellung von Ultraviolettstrahlung absorbierender und wasserarmer Kontaktlinse

Procédé de fabrication de lentilles de contact absorbant la radiation ultraviolette et à faible teneur en eau

(84) Designated Contracting States:
**DE FR GB**

(30) Priority: **09.03.2000 JP 2000065010**

(43) Date of publication of application:
**19.09.2001 Bulletin 2001/38**

(73) Proprietor: **Menicon Co., Ltd.**
**Nagoya-shi**
**Aichi-ken (JP)**

(72) Inventors:
- **Nishibayashi, Misako,**
  **Menicon Co.,Ltd.**
  **Kasugai-shi,**
  **Aichi-ken (JP)**
- **Ito, Eri,**
  **Menicon Co.,Ltd.**
  **Kasugai-shi,**
  **Aichi-ken (JP)**
- **Nakada, Kazuhiko,**
  **Menicon Co.,Ltd.**
  **Kasugai-shi,**
  **Aichi-ken (JP)**

(74) Representative: **TBK-Patent**
**Bavariaring 4-6**
**80336 München (DE)**

(56) References cited:
**EP-A- 0 744 632**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a process for preparing an ultraviolet-ray-absorbable and low water-containing soft contact lens. More particularly, the present invention relates to a process for preparing an ultraviolet-ray-absorbable and low water-containing soft contact lens, by which an ultraviolet-ray absorbing agent can be physically captured to the inside of a low water-containing soft contact lens to impart ultraviolet-ray absorbability to the soft contact lens without elution of ultraviolet-ray absorbing agent.

Conventionally, it has been known that a cornea is injured by ultraviolet-ray having a wavelength of 200 to 400 nm and various eye diseases generate. It has been recognized that sufficient protect of eyes from ultraviolet-ray is very important. So recently, the research for a contact lens material in which an ultraviolet-ray absorbing agent is contained is seriously proceeding. The contact lens material can previously prevent ultraviolet-ray from reaching to a cornea by effect of the ultraviolet-ray absorbing agent.

However, when a raw monomer mixture containing the ultraviolet-ray absorbing agent is subjected to polymerization in order to impart ultraviolet-ray absorbability to the contact lens material, there are following defects. That is, because the ultraviolet-ray absorbing agent becomes a polymerization inhibitor, a photo polymerization method utilizing ultraviolet-ray, by which polymerization reaction can be completed for a short period of time, cannot be employed. Accordingly, only a thermal polymerization method usually taking a long period of time can be employed. In addition, solubility of the ultraviolet-ray absorbing agent in the raw monomer mixture is low.

For instance, in Japanese Unexamined Patent Publication No. 120042/1997, a process for preparing an ultraviolet-ray-absorbable contact lens is disclosed. In the process, a polymer having hydroxyl group in its side chain and the shape of lens, in which an ultraviolet-ray absorbing agent substituted with at least one anhydride group is dispersed and contained, is prepared. Then, the polymer is under the basic condition which is effective for reaction of the hydroxyl group with the anhydride group in the ultraviolet-ray absorbing agent. Then, covalent ester bond is formed by the ultraviolet-ray absorbing agent, so that the ultraviolet-ray absorbing agent is fixed to the polymer.

However, there are the following defects in the above process. In the above process, because a step for imparting the anhydride group to the ultraviolet-ray absorbing agent is necessitated, the steps are complicated. In addition, because basic hydration for covalent bond between the ultraviolet-ray absorbing agent and the polymer is carried out, the ultraviolet-ray absorbing agent needs hydroxyl groups in its side chain. Furthermore, when the ultraviolet-ray absorbing agent is mixed with a monomer mixture for preparation of lens and photo polymerization is carried out by utilizing ultraviolet-ray, there is high possibility that polymerization is inhibited by the ultraviolet-ray absorbing agent.

In Japanese Patent No. 2760877, a process for preparing an ultraviolet-ray-absorbable lens is disclosed. In the process, a lens made of a polymer lens material is contacted with a basic solution containing the specific ultraviolet-ray absorbing agent which can bond to the lens material in the effective amount for absorbing ultraviolet-ray. Then, after the specific period of time passes, the above lens is picked up from the basic solution.

However, there are the following defects in the above process. In the above process, in order to form covalent bond between the ultraviolet-ray absorbing agent and the polymer lens material, both ultraviolet-ray absorbing agent and polymer lens material need a functional group which is capable of reacting with each other. In addition, when covalent bond is formed, temperature of the basic solution is specified.

An object of the present invention is to provide a process for preparing an ultraviolet-ray-absorbable contact lens, by which an ultraviolet-ray absorbing agent can be physically captured to the inside of a contact lens to impart ultraviolet-ray absorbability to the contact lens without elution of ultraviolet-ray absorbing agent and inhibition of polymerization.

This and other objects of the present invention will become apparent from the description hereinafter.

In accordance with the present invention, there is provided a process for preparing an ultraviolet-ray-absorbable and low water-containing soft contact lens, characterized by
immersing a low water-containing soft contact lens in a solution (I) prepared by dissolving an ultraviolet-ray absorbing agent in a swelling solvent,
permeating the ultraviolet-ray absorbing agent to the inside of a swollen low water-containing soft contact lens, and then removing the swelling solvent used for swelling of the low water-containing soft contact lens.

By the process of the present invention, the ultraviolet-ray absorbing agent can be physically captured to the inside of the contact lens to impart ultraviolet-ray absorbability to the contact lens without elution of ultraviolet-ray absorbing agent and the ultraviolet-ray-absorbable and low water-containing soft contact lens can be prepared without inhibition of polymerization.

The low water-containing soft contact lens used in the present invention is a soft contact lens having low water content. The "low water content" shows that possibility of elution does not become high. The water content of the low water-containing soft contact lens is at most 15 % by weight, preferably at most 10 % by weight.

A lens material which composes the above low water-containing soft contact lens is not particularly limited. In order to prevent no permeation of the ultraviolet-ray absorbing agent to the inside of the low water-containing soft contact

lens due to low swelling rate, it is desired that absorption rate for the swelling solution of the lens material is at least 12 %, preferably at least 15 %, or that linear swelling rate of the lens material in the solution (I) is at least 1.04, preferably at least 1.05. In order to remove fear that quality of the lens material is lowered so that, damage occurs and excellent article ratio is lowered, it is desired that absorption rate for the swelling solution of the lens material is at most 50 %, preferably at most 45 %, or that linear swelling rate of the lens material in the solution (I) is at most 1.15, preferably at most 1.14.

Examples of the lens material used in the present invention are a siloxane-containing polymer prepared by polymerizing a monomer mixture containing a siloxane macromonomer (A) having at least two active unsaturated groups and number average molecular weight of 2000 to 100000 and a vinyl ester of lower fatty acid (B), and the like.

The active unsaturated group in the siloxane macromonomer (A) is an active unsaturated group which can be subjected to radical polymerization. Examples of the active unsaturated group are (meth)acryloyl group, vinyl group, allyl group, (meth)acryloyloxy group, vinyl carbamate group and the like.

From the viewpoint of flexibility of the lens material, it is desired that number average molecular weight of the siloxane macromonomer (A) is at least 2000, preferably at least 2500. From the viewpoint of shape recovery of the lens material, it is desired that number average molecular weight of the siloxane macromonomer (A) is at most 100000, preferably at most 50000.

Usually, many siloxane macromonomers are bad in water-wettability and relatively lack mechanical strength when each of macromonomers is homopolymerized. Accordingly, as the siloxane macromonomer (A) used in the present invention, in order to improve water-wettability, a siloxane macromonomer having urethane group represented by the formula:

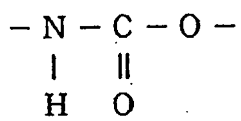

in the macromonomer structure is preferable. It is desired that the average number of the urethane group in the macromonomer structure is at least 2, preferably at least 4, and is at most 20, preferably at most 14.

In the present invention, as the siloxane macromonomer (A), a macromonomer represented by the following formula (I-1) and a macromonomer represented by the following formula (I-2) are preferably used. That is, the former macromonomer is represented by the formula (I-1):

$$A^1\text{-}(\text{-}U^1\text{-}S^1\text{-})_n\text{-}U^2\text{-}S^2\text{-}U^3\text{-}A^2 \qquad \text{(I-1)}$$

wherein each of $A^1$ and $A^2$ is independently an active unsaturated group, an active unsaturated group containing an alkylene group having 1 to 20 carbon atoms or an active unsaturated group containing an alkylene glycol group having 1 to 20 carbon atoms;
$U^1$ is a diurethane type group which forms urethane bond between neighboring $A^1$ and neighboring $S^1$, or between neighboring $S^1$ and neighboring $S^1$;
$U^2$ is a diurethane type group which forms urethane bond between neighboring $A^1$ and neighboring $S^2$, or between neighboring $S^1$ and neighboring $S^2$;
$U^3$ is a diurethane type group which forms urethane bond between neighboring $S^2$ and neighboring $A^2$;
each of $S^1$ and $S^2$ is independently a group represented by the formula:

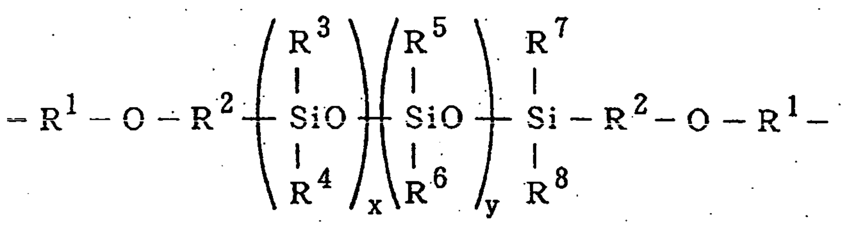

wherein each of $R^1$ and $R^2$ is independently an alkylene group having 1 to 20 carbon atoms, each of $R^3$, $R^4$, $R^5$, $R^6$, $R^7$ and $R^8$ is independently a linear, branched or cyclic alkyl group having 1 to 20 carbon atoms, which may be substituted with fluorine atom, or a group represented by the formula:

$A^3$-$U^4$-$R^1$-O-$R^2$-

in which $A^3$ is an active unsaturated group, an active unsaturated group containing an alkylene group having 1 to 20 carbon atoms or an active unsaturated group containing an alkylene glycol group having 1 to 20 carbon atoms, $U^4$ is a diurethane type group which forms urethane bond between neighboring $A^3$ and neighboring $R^1$, and each of $R^1$ and $R^2$ is the same as above, x is an integer of 1 to 1500, y is 0 or an integer of 1 to 1499, and x+y is an integer of 1 to 1500; n is 0 or an integer of 1 to 10. In addition, the latter macromonomer is represented by the formula (1-2):

$B^1$-$S^3$-$B^1$ (I-2)

wherein $B^1$ is an active unsaturated group having urethane bond; and $S^3$ is a group represented by the formula:

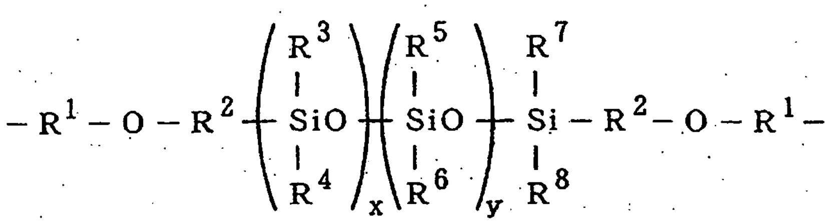

wherein each of $R^1$ and $R^2$ is independently an alkylene group having 1 to 20 carbon atoms, each of $R^3$, $R^4$, $R^5$, $R^6$, $R^7$ and $R^8$ is independently a linear, branched or cyclic alkyl group having 1 to 20 carbon atoms, which may be substituted with fluorine atom, or a group represented by the formula:

$A^3$-$U^4$-$R^1$-O-$R^2$-

-in which $A^3$ is an active unsaturated group, an active unsaturated group containing an alkylene group having 1 to 20 carbon atoms or an active unsaturated group containing an alkylene glycol group having 1 to 20 carbon atoms, $U^4$ is a diurethane type group which forms urethane bond between neighboring $A^3$ and neighboring $R^1$, and each of $R^1$ and $R^2$ is the same as above, x is an integer of 1 to 1500, y is 0 or an integer of 1 to 1499, and x+y is an integer of 1 to 1500.

In the formula (I-1), examples of the active unsaturated group represented by $A^1$ and $A^2$ are (meth)acryloyl group, vinyl group, allyl group, (meth)acryloyloxy group, vinyl carbamate group and the like. Among them, because more excellent flexibility can be imparted to the lens material and copolymerizability with the other monomers is excellent, acryloyloxy group and vinyl group are preferable, and acryloyloxy group is particularly preferable

When the above active unsaturated group contains an alkylene group or an alkylene glycol group, it is desired that the number of carbon atoms of the alkylene group or the alkylene glycol group is 1 to 20, preferably 1 to 10 carbon atoms.

In the formula (I-1), as to the group, $S^1$ or $S^2$, represented by the formula:

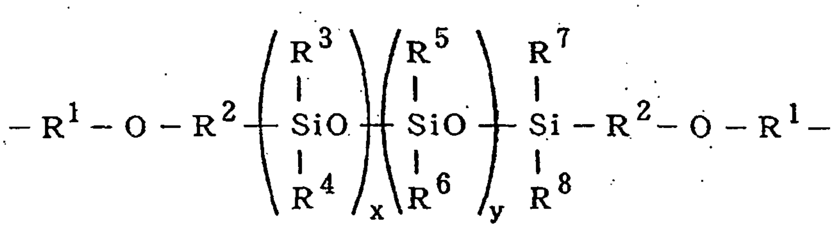

wherein each of $R^1$, $R^2$, $R^3$, $R^4$, $R^5$, $R^6$, $R^7$, $R^8$, x and y is the same as above, each of $R^1$ and $R^2$ is preferably an alkylene group having 1 to 5 carbon atoms, and each of $R^3$, $R^4$, $R^5$, $R^6$, $R^7$ and $R^8$ is preferably an alkyl group having 1 to 5 carbon atoms. In the group, $R^3$, $R^4$, $R^5$, $R^6$, $R^7$ or $R^8$, represented by the formula: $A^3$-$U^4$-$R^1$-O-$R^2$-, $A^3$ is the same active unsaturated group as the above exemplified one. When the active unsaturated group contains an alkylene group or an alkylene glycol group, it is desired that the number of carbon atoms of the alkylene group or the alkylene glycol group is 1 to 20, preferably 1 to 10 carbon atoms. In addition, it is desired that x is an integer of 1 to 500, y is 0 or an integer of 1 to 499, and x+y is an integer of 1 to 500.

In the formula (I-1), it is desired that n is 0 or an integer of 1 to 5.

In the formula (I-2), examples of the active unsaturated group having urethane bond, represented by $B^1$ are (meth)acryloylisocyanate group, (meth)acryloyloxyisocyanate group, allylisocyanate group, vinylbenzylisocyanate group and the like. The group represented by $S^3$ in the formula (I-2) is the same as the group represented by $S^1$ or $S^2$ in the above formula (I-1)

Among the above macromonomers, because flexibility such as shape recovery and mechanical strength can be greatly imparted to the lens material, a macromonomer represented by the formula:

$$A^1\text{-}U^2\text{-}S^2\text{-}U^3\text{-}A^2$$

wherein each of $A^1$, $A^2$, $U^2$, $U^3$ and $S^2$ is the same as above; and a macromonomer represented by the formula:

$$A^1\text{-}(\text{-}U^1\text{-}S^1\text{-})_{n'}\text{-}U^2\text{-}S^2\text{-}U^3\text{-}A^2$$

wherein each of $A^1$, $A^2$, $U^1$, $U^2$, $U^3$, $S^1$ and $S^2$ is the same as above, and n' is an integer of 1 to 4, are preferable. In particular, a macromonomer represented by the formula:

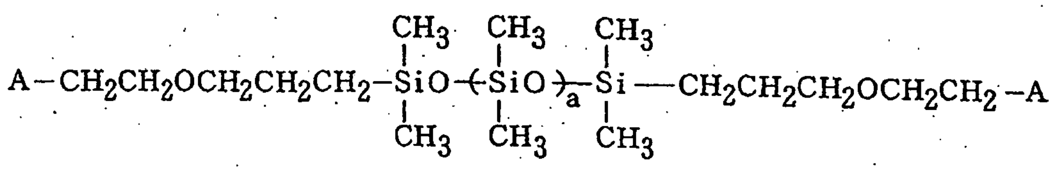

wherein A is a group represented by the formula:

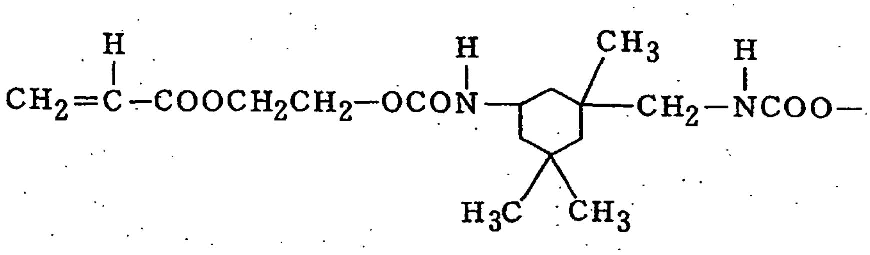

and a is an integer of 20 to 50, is preferable.

Typical preferable example of the vinyl ester of lower fatty acid (B) is a compound represented by the formula (II):

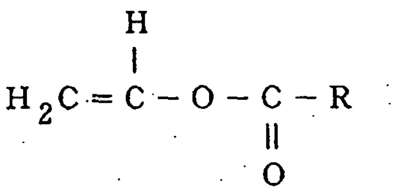 (II)

wherein R is hydrogen atom or an alkyl group having 1 to 5 carbon atoms, which may be substituted with a halogen atom. Concrete examples of the compound are vinyl formate, vinyl acetate, vinyl propionate, vinyl butyrate, vinyl pivalate, vinyl versatate, vinyl laurate, vinyl stearate, vinyl monochloroacetate, vinyl monofluoroacetate, vinyl trichloroacetate, vinyl trifluoroacetate and the like. These can be used alone or in admixture thereof.

Among the above vinyl esters of lower fatty acid (B), because shape recovery and hydrophilic property can be greatly imparted to the lens material, vinyl acetate, vinyl propionate and vinyl pivalate are preferable. In particular, vinyl acetate is preferable.

The siloxane-containing polymer which is the lens material used in the present invention is prepared by polymerizing the monomer mixture containing the siloxane macromonomer (A) and the vinyl ester of lower fatty acid (B). The monomer mixture can contain also, for instance, a silicon-containing monomer (C).

Typical examples of the silicon-containing monomer (C) are a silicon-containing (meth)acrylate such as pentamethyldisiloxanylmethyl (meth)acrylate, trimethylsiloxydimethylsilylpropyl (meth)acrylate, methylbis(trimethylsiloxy)silylpropyl (meth)acrylate, tris(trimethylsiloxy)silylpropyl(meth)acrylate, mono[methylbis(trimethylsiloxy)siloxy]bis(trimethylsiloxy)silylpropyl (meth)acrylate, tris[methylbis(trimethylsiloxy)siloxy]silylpropyl (meth)acrylate, trimethylsilylmethyl (meth)acrylate, trimethylsilylpropyl (meth)acrylate, methylbis(trimethylsiloxy)silylethyltetramethyldisiloxanylmethyl (meth)acrylate, tetramethyltriisopropylcyclotetrasiloxanylpropyl (meth)acrylate, tetramethyltriisopropylcyclotetrasiloxybis(trimethylsiloxy)silylpropyl (meth)acrylate or trimethylsiloxydimethylsilylpropyl (meth)acrylate; a silicon-containing styrene derivative represented by the formula:

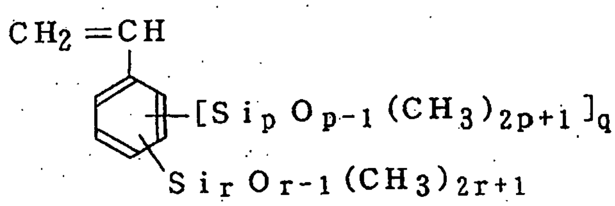

wherein p is an integer of 1 to 15, q is 0 or 1 and r is an integer of 1 to 15, such as tris(trimethylsiloxy)silylstyrene, methylbis(trimethylsiloxy)silylstyrene, dimethylsilylstyrene, trimethylsilylstyrene, tris(trimethylsiloxy)siloxanyldimethylsilylstyrene, [methylbis(trimethylsiloxy)siloxanyl]dimethylsilylstyrene, pentamethyldisiloxanylstyrene, heptamethyltrisiloxanylstyrene, nonamethyltetrasiloxanylstyrene, pentadecamethylheptasiloxanylstyrene, heneicosamethyldecasiloxanylstyrene, heptacosamethyltridecasiloxanylstyrene, hentriacontamethylpentadecasiloxanylstyrene, trimethylsiloxypentamethyldisiloxymethylsilylstyrene, tris (pentamethyldisiloxy) silylstyrene, [tris (trimethylsiloxy) siloxanyl] bis (trimethylsiloxy) silylstyrene, methylbis (heptamethyltrisiloxy) silylstyrene, tris [methylbis (trimethylsiloxy) siloxy] silylstyrene, trimethylsiloxybis [tris (trimethylsiloxy) siloxy] silylstylene, heptakis (trimethylsiloxy) trisiloxanylstyrene; tris [tris (trimethylsiloxy) siloxy] silylstyrene, [tris (trimethylsiloxy) hexamethyltetrasiloxy] [tris (trimethylsiloxy)-siloxy] trimethylsiloxysilylstyrene, nonakis (trimethylsiloxy) tetrasiloxanylstyrene, methylbis (tridecamethylhexasiloxy) silylstyrene, heptamethylcyclotetrasiloxanylstyrene, heptamethylcyclotetrasiloxybis (trimethylsiloxy) silylstyrene or tripropyltetramethylcyclotetrasiloxanylstyrene; and the like. These can be used alone or in admixture thereof.

Among the above silicon-containing monomers (C), because high oxygen permeability and flexibility, in particular, shape recovery can be greatly imparted to the lens material at the same time, the silicon-containing (meth)acrylate is preferable. In particular, tris(trimethylsiloxy)silylpropyl acrylate is preferable.

In the present specification, "--(meth)acrylate" means "-- acrylate and/or methacrylate", and the same is also true for the other (meth)acrylate derivatives.

Furthermore, the monomer mixture can contain also, for instance, a fluorine-containing monomer (D), in addition to the siloxane macromonomer (A), the vinyl ester of lower fatty acid (B) and the silicon-containing monomer (C).

Typical examples of the fluorine-containing monomer (D) are 2,2,2-trifluoroethyl (meth)acrylate, 2,2,3,3-tetrafluoropropyl (meth)acrylate, 2,2,3,3-tetrafluoro-t-pentyl (meth)acrylate, 2,2,3,4,4,4-hexafluorobutyl (meth)acrylate, 2,2,3,4,4,4-hexafluoro-t-hexyl (meth)acrylate, 2,3,4,5,5,5-hexafluoro-2,4-bis(trifluoromethyl)pentyl (meth)acrylate, 2,2,3,3,4,4-hexafluorobutyl (meth)acrylate, 2,2,2,2',2',2'-hexafluoroisopropyl (meth)acrylate, 2,2,3,3,4,4,4-heptafluorobutyl (meth)acrylate, 2,2,3,3,4,4,5,5-octafluoropentyl (meth)acrylate; a fluoroalkyl (meth)acrylate represented by the formula:

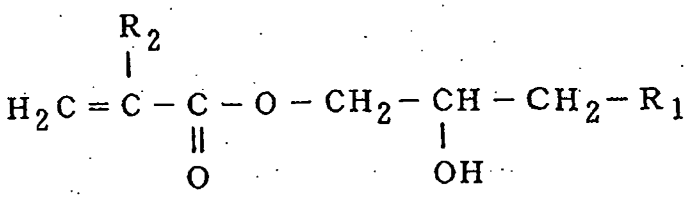

wherein $R_1$ is a fluoroalkyl group having 3 to 15 carbon atoms, and $R_2$ is hydrogen atom or methyl group, such as 3-perfluorobutyl-2-hydroxypropyl (meth)acrylate, 3-perfluorohexyl-2-hydroxypropyl (meth)acrylate, 3-perfluorooctyl-2-hydroxypropyl (meth)acrylate, 3-(perfluoro-3-methylbutyl)-2-hydroxypropyl (meth)acrylate, 3-(perfluoro-5-methylhexyl)-2-hydroxypropyl (meth)acrylate or 3-(perfluoro-7-methyloctyl)-2-hydroxypropyl (meth)acrylate; and the like.

Among them, because oxygen permeability, flexibility and lipid-stain resistance, in particular, flexibility can be greatly imparted to the lens material, the fluoroalkyl acrylate is preferable.

Usually, although many fluorine-containing compounds can impart oxygen permeability and lipid-stain resistance to a material, the compounds are bad in water-wettability. To the contrary, because flexibility and water-wettability can be imparted to the lens material without lacking oxygen permeability and lipid-stain resistance, a fluoroalkyl acrylate having hydroxyl group, represented by the formula:

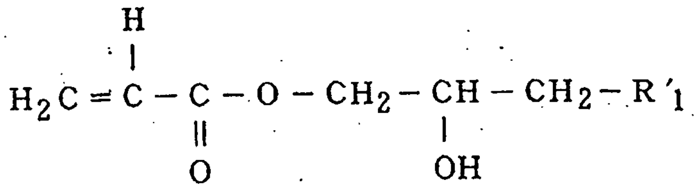

wherein $R'_1$ is a perfluoroalkyl group having 3 to 15, preferably 3 to 8, more preferably 4 to 6 carbon atoms is particularly preferable.

The proportion of the siloxane macromonomer (A), the vinyl ester of lower fatty acid (B) and the silicon-containing monomer (C) used as occasion demands is preferably defined as mentioned below. That is, in order to sufficiently impart flexibility, mechanical strength and oxygen permeability to the lens material, it is desired that the weight ratio of the total amount of siloxane macromonomer (A) and silicon-containing monomer (C) to the amount of vinyl ester of lower fatty acid (B) (total amount of (A) and (C)/amount of (B), that is, when the silicon-containing monomer (C) is not used, amount of (A)/amount of (B)), is at least 30/70, preferably at least 50/50. In order to sufficiently impart shape recovery and hydrophilic property to the lens material, it is desired that the above weight ratio is at most 90/10, preferably at most 80/20.

When the silicon-containing monomer (C) is used, the proportion of the siloxane macromonomer (A) and the silicon-containing monomer (C) is preferably defined as mentioned below. That is, in order to sufficiently impart mechanical strength to the lens material without lowering shape recovery, it is desired that the weight ratio of the amount of siloxane macromonomer (A) to the amount of silicon-containing monomer (C) (amount of (A)/amount of (C)), is at least 20/80, preferably at least 25/75. In order to sufficiently impart oxygen permeability to the lens material, it is desired that the above weight ratio is at most 90/10, preferably at most 80/20.

The proportion of the siloxane macromonomer (A), the vinyl ester of lower fatty acid (B), and the silicon-containing monomer (C) and the fluorine-containing monomer (D) which are used as occasion demands is preferably defined as mentioned below. That is, in order to sufficiently exhibit effects from the siloxane macromonomer (A), the vinyl ester of lower fatty acid (B) and the silicon-containing monomer (C), it is desired that the weight ratio of the total amount of siloxane macromonomer (A), vinyl ester of lower fatty acid (B) and silicon-containing monomer (C) to the amount of fluorine-containing monomer (D) (total amount of (A), (B) and (C)/amount of (D)), is at least 20/80, preferably at least 40/60. In order to sufficiently impart, in particular, lipid-stain resistance to the lens material, it is desired that the above weight ratio is at most 90/10, preferably at most 85/15.

As occasion demands, the monomer mixture can also contain a crosslinkable compound having at least 2 polymerizable groups (E) (hereinafter referred to as "crosslinkable compound (E)").

Typical examples of the above crosslinkable compound (E) are ethylene glycol di(meth)acrylate, diethylene glycol di(meth)acrylate, triethylene glycol di(meth)acrylate, propylene glycol di(meth)acrylate, dipropylene glycol di(meth) acrylate, allyl (meth)acrylate, vinyl (meth)acrylate,trimethylolpropane tri(meth)acrylate, methacryloyloxydiethyl acrylate, divinylbenzene, diallyl phthalate, diallyl adipate, diethylene glycol diallyl ether, triallylisocyanurate, $\alpha$-methylene-N-vinylpyrrolidone, 4-vinylbenzyl (meth)acrylate, 3-vinylbenzyl (meth)acrylate, 2,2-bis(p-(meth)acryloyloxyphenyl)hexafluoropropane, 2,2-bis(m-(meth)acryloyloxyphenyl)hexafluoropropane, 2,2-bis(o-(meth)acryloyloxyphenyl)hexafluoropropane, 1,4-bis(2-(meth)acryloyloxyhexafluoroisopropyl)benzene, 1,3-bis(2-(meth)acryloyloxyhexafluoroisopropyl)benzene, 1,2-bis(2-(meth)acryloyloxyhexafluoroisopropyl)benzene, 1,4-bis(2-(meth)acryloyloxyisopropyl)benzene,1,3-bis (2-(meth)acryloyloxyisopropyl)benzene, 1,2-bis(2-(meth)acryloyloxyisopropyl)benzene and the like. These can be used alone or in admixture thereof.

Among the crosslinkable compounds (E), because optical property and mechanical strength can be greatly imparted to the lens material and handling is easy, ethylene glycol di(meth)acrylate, diethylene glycol di(meth)acrylate, diallyl adipate and diethylene glycol diallyl ether are preferable. In particular, ethylene glycol di(meth)acrylate and diethylene glycol diallyl ether are preferable.

In order to sufficiently impart optical property and mechanical strength to the lens material, it is desired that the amount of the crosslinkable compound (E) in the monomer mixture is at least 0.01 % by weight, preferably at least 0.05 % by weight. In order to remove fear that flexibility of the lens material is lowered although mechanical strength is imparted to the lens material, it is desired that the amount of the crosslinkable compound (E) in the monomer mixture is at most 15 % by weight, preferably at most 10 % by weight.

In the present invention, the monomer mixture is suitably adjusted to the desired kind and amount of monomer. Then, usually in accordance with a radical polymerization method such as a thermal polymerization method or a photo polymerization method, in which radical generates in an active unsaturated group and polymerization reaction is carried out, a radical polymerization initiator, a photo sensitizer and the like are added to the monomer mixture to give a lens material.

Typical examples of the radical polymerization initiator are a thermal polymerization initiator such as azobisisobutyronitrile, azobisdimethylvaleronitrile, benzoyl peroxide, t-butyl hydroperoxide, cumene peroxide; a benzoin photo polymerization initiator such as methylorthobenzoyl benzoate, methylbenzoyl formate, benzoin methyl ether, benzoin ethyl ether, benzoin isopropyl ether, benzoin isobutyl ether or benzoin n-butyl ether; a phenone photo polymerization initiator such as 2-hydroxy-2-methyl-1-phenylpropane-1-one, p-isopropyl- α-hydroxyisobutylphenone, p-t-butyltrichloroacetophenone, 2,2-dimethoxy-2-phenylacetophenone, α,α-dichloro-4-phenoxyacetophenone or N,N-tetraethyl-4,4-diaminobenzophenone; 1-hydroxycyclohexyl phenyl ketone; 1-phenyl-1,2-propanedione-2-(o-ethoxycarbonyl)oxime; a thioxanthone photo polymerization initiator such as 2-chlorothioxanthone or 2-methylthioxanthone; dibenzosvarron; 2-ethylanthraquinone; benzophenone acrylate; benzophenone; benzyl; and the like.

Although the photo sensitizer is not activated alone by irradiation of ultraviolet-ray, the photo sensitizer effects as a promotor when used together with a photo initiator, so that more excellent effects can be exhibited than the photo initiator alone. Examples of the photo sensitizer are 1,2-benzoanthraquinone; an amine compound such as n-butylamine, di-n-butylamine or triethylamine; tri-n-butylphosphine; allylthiourea; s-behzylisothiuronium-p-toluenesulfinate; diethylaminoethyl methacrylate; and the like.

The radical polymerization initiator and the photo sensitizer can be suitably selected and used alone or in admixture thereof. It is desired that the amount of the radical polymerization initiator and the photo sensitizer is about 0.002 to 2 parts by weight (hereinafter referred to as "part(s)"), preferably about 0.01 to 1 part, based on 100 parts of the total amount of monomer mixture.

In the radical polymerization method, the radical polymerization initiator and the photo sensitizer may be merely used for polymerization of the monomer mixture. For instance, in order to more improve compatibility of the monomer mixture with each other, a diluent can be used.

Typical examples of the diluent are an alcohol such as methanol, ethanol, propanol, butanol, pentanol or hexanol; a ketone such as acetone or methyl ethyl ketone; an ether such as diethyl ether or tetrahydrofuran; and the like. These can be used alone or in admixture thereof.

Among the diluents, because solubility of the monomer mixture is excellent, an alcohol having 1 to 6 carbon atoms. In particular, n-propanol, n-butanol and n-pentanol are preferable.

The monomer mixture is admixed with the diluent according to the following proportion. That is, in order to sufficiently dissolve the monomer mixture in the diluent, it is desired that the weight ratio of the amount of monomer mixture to the amount of diluent (amount of monomer mixture/amount of diluent) is at most 90/10, preferably at most 80/20. In order to remove fear that the aimed polymer becomes cloud in white to lower optical property and the polymer lacks mechanical strength, it is desired that the above weight ratio is at least 30/70, preferably at least 50/50

The lens material can be prepared by means of every conventional method. From the viewpoint that properties of the lens material can be maximally utilized, in particular, it is preferable that the lens material is prepared by the following method. That is, the monomer mixture and the diluent used as occasion demands are injected into a mold composed of two parts which are one part corresponding to the front shape of a soft contact lens and the other part corresponding to the back shape of the lens, and the mold is sealed. Then, polymerization is carried out to give a polymer for the lens material.

As mentioned above, after the monomer mixture and the diluent used as occasion demands are injected into the mold, polymerization is carried out to give a polymer. The polymerization method is not particularly limited. Usual methods can be employed.

The above usual methods are, for instance, a thermal polymerization method, a photo polymerization method and a combination method of thermal polymerization and photo polymerization. In the thermal polymerization method, a mixture of the monomer mixture containing the radical polymerization initiator and the diluent used as occasion demands is heated at about 30° to 60°C for several hours to several 10 hours and the monomer mixture is polymerized. Then, the temperature of reaction system is gradually increased to about 120° to 140°C during several hours to several 10 hours to complete the polymerization. In the photo polymerization method, the above mixture is irradiated with ray such as ultraviolet-ray, which has wavelength corresponding to absorption band of activation of the radical polymerization initiator and then, the monomer mixture is polymerized. Among these polymerization methods, the photo polymerization method is preferable because polymerization can be carried out within a short period of time.

When the thermal polymerization method is carried out, the above mixture can be heated in a thermostat container or a thermostat room, and can be irradiated with electromagnetic wave such as microwave. The temperature of the mixture may be increased stepwise. When the photo polymerization method is carried out, the photo sensitizer may be further added to the mixture.

The obtained polymer is put out from the mold to give a lens material.

The lens material can be subjected to, as occasion demands, mechanical process such as cutting process or polishing process.

The lens material has excellent properties which are sufficient as a soft contact lens material. However, in order to more improve water-wettability, it is preferred that the surface of the lens material is subjected to saponification.

The saponification is carried out according to the conventionally known saponification method of polyvinyl ester. For instance, as to the above siloxane-containing polymer, units derived from the vinyl ester of lower fatty acid (B), which can decompose by saponification, are subjected to alkali treatment with an alkaline compound or to acid treatment with, for instance, sulfuric acid to form vinyl alcohol. In saponification by the acid treatment, there are defects that saponification speed is late, uniform saponification is difficult and side reaction occurs. Accordingly, saponification by the alkali treatment is preferred. By saponification, hydrophilic property (surface water-wettability) can be imparted to the lens material without much increase of water content.

Examples of the alkaline compound used for the alkali treatment are ammonia, a alkaline metal hydroxide, an alkaline earth metal hydroxide and the like. Concrete examples of the alkaline compound are ammonium hydroxide, sodium hydroxide, potassium hydroxide, calcium hydroxide and the like. Because most alkaline compounds are solids, it is preferred that these alkaline compounds are dissolved in water, an alcohol or an ether to give an alkaline solution and the alkaline solution is used for saponification.

Examples of the alcohol are methanol, ethanol, propanol, butanol and the like. Examples of the ether are diethyl ether, tetrahydrofuran and the like.

Among the alkaline solutions of alkaline compound, used for saponification, in order to efficiently carry out saponification, an alcohol is preferably used. A methanol solution of sodium hydroxide having a concentration of 0.01 to 1 mol/l is more preferable. In particular, a methanol solution of sodium hydroxide, in which the volume ratio of methanol to water (methanol/water) is 10/90 to 90/10, is preferable.

The lens material is subjected to saponification by immersing the polymer in the alkaline solution or the solution of acidic compound.

The temperature in saponification is not particularly limited. In general, it is desired that the temperature is 0° to 100°C, preferably 10° to 70°C.

The treatment time for saponification is decided in accordance with the kind of alkaline compound or acidic compound, the concentration of alkaline compound or acidic compound, or the temperature in saponification. In order to effectively improve hydrophilic property of the lens material, it is desired that the treatment time is at least 0.1 hour, preferably at least 0.5 hour. In order to remove fears that the lens material becomes cloud in white to lower transparency and mechanical strength of the lens material is lowered to give an unsuitable material for soft contact lenses and that working property is lowered due to much time, it is desired that the treatment time is at most 30 hours, preferably at most 15 hours.

The saponified lens material (low water-containing soft contact lens) can be boiled in physiological saline (0.9 % sodium chloride aqueous solution) for several hours.

Among the lens materials, in the present invention, because water-wettability is more improved by saponification, it is desired that the lens material is composed of a vinyl acetate polymer.

The solution (I) used in the present invention is prepared by dissolving the ultraviolet-ray absorbing agent in the swelling solvent.

Examples of the ultraviolet-ray absorbing agent are a benzotriazole ultraviolet-ray absorbing agent such as 2-(2'-hydroxy-5'-methacryloxyethyleneoxy-t-butylphenyl)-5-methylbenzotriazole or a compound represented by the formula (III):

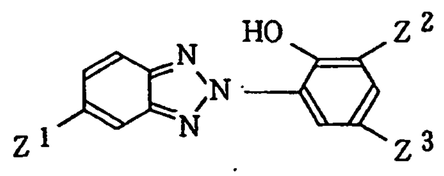

(III)

wherein $Z^1$ is hydrogen atom, a halogen atom such as chlorine atom, bromine atom or iodine atom, an alkyl group having 1 to 6 carbon atoms or an alkoxyl group having 1 to 6 carbon atoms, and each of $Z^2$ and $Z^3$ is independently hydrogen atom or an alkyl group having 1 to 6 carbon atoms, such as 2-(2'-hydroxy-5'-methylphenyl)benzotriazole, 5-chloro-2-(3'-t-butyl-2'-hydroxy-5'-methylphenyl)benzotriazole or 2-(5-chloro-2H-benzotriazole-2-yl)-6-(1,1-dimethyl)-4-methylphenol; a benzophenone ultraviolet-ray absorbing agent such as 2-hydroxy-4-methoxybenzophenone or 2-hydroxy-4-octoxybenzophenone; a salicylic acid derivative ultraviolet-ray absorbing agent; a hydroxyacetophenone derivative ultraviolet-ray absorbing agent; and the like. Among them, because ultraviolet-ray absorbability and stability for the swelling solution are excellent, the benzotriazole ultraviolet-ray absorbing agent is preferable. In particular, the compound represented by the formula (III), such as 2-(5-chloro-2H-benzotriazole-2-yl)-6-(1,1-dimethyl)-4-methylphenol is preferable.

The above ultraviolet-ray absorbing agent may or not have a polymerizable group. There is no limitation.

As the ultraviolet-ray absorbing agent, because elution hardly occurs, it is desired that a compound having a molecular weight of at least 200, preferably at least 250 is used. Because permeability to the inside of the low water-containing soft contact lens is excellent, it is desired that a compound having a molecular weight of at most 1200, preferably at most 1000 is used.

The kind of swelling solution (swelling solvent) is not particularly limited. A solution which can dissolve the ultraviolet-ray absorbing agent and swell the low water-containing soft contact lens can be used. The kind and concentration of swelling solvent can be suitably selected and decided so that absorption rate for the swelling solvent of the lens material (linear swelling rate of the lens material in the solution (I)) is adjusted in the prescribed range. As the swelling solvent, because solubility of the ultraviolet-ray absorbing agent and swelling property of the low water-containing soft contact lens are excellent, an alcohol such as methanol, ethanol or 2-propanol; an alcohol solution such as a mixed solution of alcohol and water are preferable.

In order to impart sufficient ultraviolet-ray absorbability to the lens material in a short period of time, it is desired that the concentration of the ultraviolet-ray absorbing agent in the solution (I) is at least 500 ppm, preferably at least 700 ppm on the basis of weight. In order to remove fear that imparted ultraviolet-ray absorbability varies widely although treatment can be carried out in a short period of time, it is desired that the concentration of the ultraviolet-ray absorbing agent in the solution(I) is at most 2000 ppm, preferably at most 1200 ppm on the basis of weight.

To the solution (I) is added about 0.01 to 1 mol/l alkaline solution such as sodium hydroxide aqueous solution, so that the ultraviolet-ray absorbing agent can permeate to the inside of the lens material (low water-containing soft contact lens) and the lens material can be saponified at the same time.

The low water-containing soft contact lens is immersed in the prepared solution (I) and the low water-containing soft contact lens is swollen with the swelling solvent in the solution (I). Then, the ultraviolet-ray absorbing agent permeates to the inside of the swollen low water-containing soft contact lens. In the present invention, in order to more easily permeate the ultraviolet-ray absorbing agent to the inside of the low water-containing soft contact lens, before the low water-containing soft contact lens is immersed in the solution (I), the low water-containing soft contact lens can be previously immersed in a swelling solution such as methanol, ethanol or 2-propanol, which can excessively swell the low water-containing soft contact lens, so that the low water-containing soft contact lens can be swollen to a certain extent.

When the low water-containing soft contact lens is immersed in the solution (I), the temperature of the solution (I) and immersing time are not particularly limited. The temperature of the solution (I) and immersing time are adjusted so that the low water-containing soft contact lens can be sufficiently swollen and the ultraviolet-ray absorbing agent can sufficiently permeate to the inside of the low water-containing soft contact lens. For instance, it is desired that the temperature of the solution (I) is about 15° to 35°C and the immersing time is about 0.5 to 5 hours.

When the low water-containing soft contact lens is immersed in the solution (I) under the above conditions, non-reacted monomers in the swollen low water-containing soft contact lens can be extracted at the same time.

The non-reacted monomers can be extracted by immersing the low water-containing soft contact lens in an alcohol solution such as methanol, ethanol or 2-propanol.

Then, after finishing permeation of the ultraviolet-ray absorbing agent to the inside of the swollen low water-containing soft contact lens and as occasion demands, extraction of the non-reacted monomers in the low water-containing soft contact lens, the swelling solvent with which the low water-containing soft contact lens has been swollen is removed. By removing the swelling solvent, the swollen low water-containing soft contact lens can recover the original lens shape which has been remained before swelling.

The swelling solvent can be removed by immersing the low water-containing soft contact lens in distilled water.

As a result, the ultraviolet-ray-absorbable and low water-containing soft contact lens which has the desired original lens shape can be prepared. The ultraviolet-ray-absorbable and low water-containing soft contact lens shows no elution of the ultraviolet-ray absorbing agent in spite of no chemical bond of the ultraviolet-ray absorbing agent with the lens material. This is caused from the fact that the ultraviolet-ray absorbing agent is physically captured to the inside of the lens material. In addition, because addition of the ultraviolet-ray absorbing agent is not necessitated during polymerization of the monomer mixture for preparing the lens material, there is no fear of inhibition of polymerization even if photo polymerization method is employed.

The process for preparing an ultraviolet-ray-absorbable and low water-containing soft contact lens of the present invention is more specifically described and explained by mans of the following Examples. It is to be understood that the present invention is not limited to the Examples, and various changes and modifications may be made in the invention without departing from the spirit and scope thereof.

PREPARATION EXAMPLES 1 to 2

A monomer mixture, a photo polymerization initiator and a solvent, shown in TABLE 1 were uniformly mixed with each other to give a mixture. Then, the mixture was injected into a mold made of polypropylene, having contact lens shape. The shape of the mold corresponds to a plate having a diameter of 15 mm and a thickness of 0.2 mm.

After the mold was transferred to a thermostated room, photo polymerization was carried out by irradiating the content in the mold with ultraviolet-ray having a wavelength of 360 nm at about 1 $mW/cm^2$ for 60 minutes to give a polymer. Then, the polymer was put out from the mold to give a test plate for low water-containing soft contact lens (siloxane-containing polymer), having a diameter of 15 mm and a thickness of 0.2 mm. Hereinafter, the test plate in PREPARATION EXAMPLE 1 is referred to as "Test plate A", and the test plate in PREPARATION EXAMPLE 2 is referred to as "Test plate B". The water content of Test plate A and Test plate B was examined in the following method. That is, the weight of each test plate in the equilibrated swollen state with distilled water (hereinafter referred to as "W" (g)) was measured, and the weight of each test plate in the dried constant state at 100°C for 16 to 24 hours (hereinafter referred to as "$W_0$" (g)) was measured. By using the measured values W and $W_0$, the water content was calculated in accordance with the following equation.

$$\text{Water content (\% by weight)} = [(W-W_0) / W] \times 100$$

As a result, the water content of Test plate A was 3 % by weight and the water content of Test plate B was 9 % by weight.

Each code in TABLE 1 shows the following each compound.

Macromer: Acrylate type dimethylsiloxane macromonomer containing urethane group, represented by the formula:

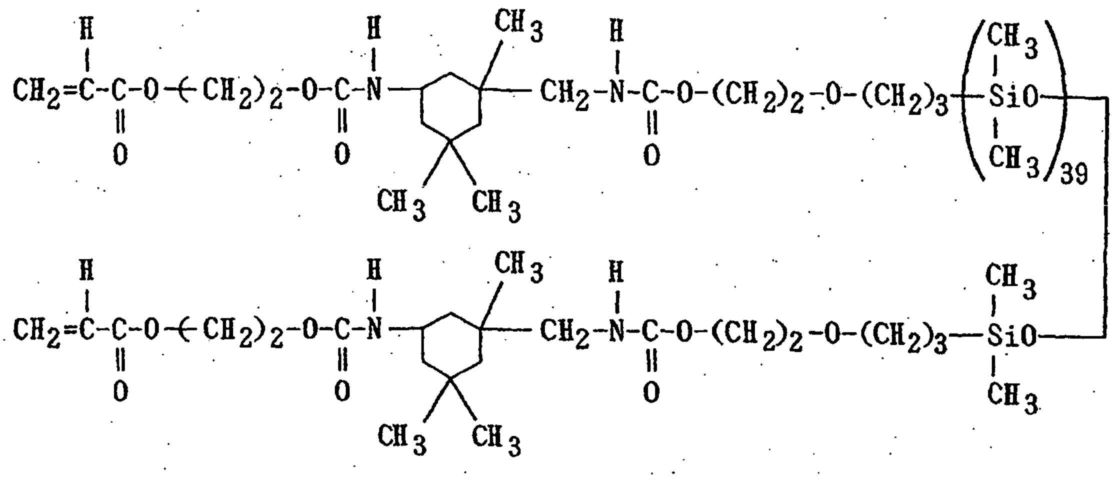

(made by Menicon Co., Ltd., average molecular weight: 5500 to 7000)
Si-monomer: Tris(trimethylsiloxy)silylpropyl acrylate
VAc: Vinyl acetate
2-HEMA: 2-Hydroxyethyl methacrylate
EDMA: Ethylene glycol dimethacrylate
TRIAM: Diethylene glycol diallyl ether
D 1173: 2-Hydroxy-2-methyl-1-phenylpropane-1-one
(Darocure (Registered Trademark) 1173, made by Ciba Specialty Chemicals Holding Incorporated)
1-BuOH: 1-Butanol

TABLE 1

| Preparation Example No. | Component (Part(s)) | | | | | | | |
|---|---|---|---|---|---|---|---|---|
| | Macromer | Si-monomer | VAc | 2-HEMA | EDMA | TRIAM | D1173 | 1-BuOH |
| 1 | 51 | 14 | 35 | - | 0.4 | 0.8 | 0.2 | 50 |
| 2 | 40 | 30 | - | 30 | 1 | - | 0.2 | 60 |

EXAMPLE 1

A solution (I-1) was previously prepared by dissolving 2-(5-chloro-2H-benzotriazole-2-yl)-6-(1,1-dimethyl)-4-methylphenol (hereinafter referred to as "CBDMP") in 50 % 2-propanol solution. The CBDMP concentration in the solution (I-1) was 1000 ppm on the basis of weight. Test plate A was immersed in the solution (I-1) at room temperature for about 2 hours.

After Test plate A was put out from the solution (I-1), Test plate A was immersed in 60 % methanol solution of 0.5 mol/l sodium hydroxide at room temperature for about 2 hours, so that Test plate A was saponified.

The saponified Test plate A was immersed in distilled water at room temperature for about 16 hours, so that Test plate A was hydrated to give an ultraviolet-ray-absorbable and low water-containing soft contact lens material.

EXAMPLE 2

A solution (I-2) was previously prepared by dissolving CBDMP in 60 % methanol solution of 0.5 mol/l sodium hydroxide. The CBDMP concentration in the solution (I-2) was 1000 ppm on the basis of weight. Test plate A was immersed in the solution (I-2) at room temperature for about 2 hours.

After Test plate A was put out from the solution (I-2), Test plate A was immersed in distilled water at room temperature for about 16 hours, so that Test plate A was hydrated to give an ultraviolet-ray-absorbable and low water-containing soft contact lens material.

EXAMPLES 3 to 7

Solutions (I-3) to (I-7) were previously prepared by dissolving CBDMP in methanol solution of 0.5 mol/l sodium hydroxide. The CBDMP concentration in each of solutions (I-3) to (I-7) was 1000 ppm on the basis of weight. Each methanol concentration in the methanol solution used for the solutions (I-3) to (1-7) was 10 % (solution (I-3) in EXAMPLE 3), 40 % (solution (I-4) in EXAMPLE 4), 50 % (solution (I-5) in EXAMPLE 5), 60 % (solution (I-6) in EXAMPLE 6) or 80 % (solution (I-7) in EXAMPLE 7). Each Test plate B was immersed in each of the solutions (I-3) to (I-7) at room temperature for about 2 hours.

After each Test plate B was put out from each of the solutions (I-3) to (I-7), each Test plate B was immersed in distilled water at room temperature for about 16 hours, so that each Test plate B was hydrated to give an ultraviolet-ray-absorbable and low water-containing soft contact lens material.

COMPARATIVE EXAMPLE 1

Test plate A was immersed in 60 % methanol solution of 0.5 mol/l sodium hydroxide at room temperature for about 2 hours.

After Test plate A was put out from the methanol solution, Test plate A was immersed in distilled water at room temperature for about 16 hours, so that Test plate A was hydrated to give a low water-containing soft contact lens material.

TEST EXAMPLE

As to the ultraviolet-ray-absorbable and low water-containing soft contact lens materials prepared in EXAMPLES 1 to 7 and the low water-containing soft contact lens material prepared in COMPARATIVE EXAMPLE 1, linear swelling rate in each of the solutions (I-1) to (I-7) or the methanol solution, absorption rate for the swelling solution, ray transmittance within the wavelength range of ultraviolet-ray and elution of the ultraviolet-ray absorbing agent were examined in accordance with the following methods, respectively. The results are shown in TABLE 2.

(1) Linear swelling rate

The diameter of Test plate A or B in the dried state before immersion in each of the solutions (I-1) to (I-7) or

the methanol solution (hereinafter referred to as "LD" (mm)) was measured, and the diameter of Test plate A or B in the swollen state after immersion (hereinafter referred to as "LW" (mm)) was measured. By using the measured values LD and LW, the linear swelling rate was calculated in accordance with the following equation.

$$\text{Linear swelling rate (\%)} = [\,(LW-LD)\ /\ LD\,] \times 100$$

(2) Absorption rate

The weight of Test plate A or B in the dried state before immersion in each of the solutions (I-1) to (I-7) or the methanol solution (hereinafter referred to as "MD" (g)) was measured, and the weight of Test plate A or B in the swollen state after immersion (hereinafter referred to as "MW" (g)) was measured. By using the measured values MD and MW, the absorption rate was calculated in accordance with the following equation.

$$\text{Absorption rate (\%)} = [\,(MW-MD)\ /\ MD\,] \times 100$$

(3) Ray transmittance

In order to judge whether ultraviolet-ray absorbability could be exhibited by dispersion of CBDMP in Test plate A or B, or not, ray transmission spectra was measured. Distilled water was used as a control. The measuring apparatus was Ultraviolet-ray and Visible-ray automatic recording spectrophotometer made by SHIMAZU CORPORATION (UV-3100). The measuring conditions were as follows: Measuring wavelength: 190 to 800 nm
SLIT: 2.0 nm
SPEED: MID
Measuring mode: %T

Then, the chart weight in the ray-transmitted part within ultraviolet-ray range having a wavelength of 190 to 380 nm (hereinafter referred to as "x") was weighed, and the chart weight in the non-ray-transmitted part (hereinafter referred to as "y") was weighed. By using the measured values x and y, the ray transmittance of the lens material within ultraviolet-ray range was calculated in accordance with the following equation.

$$\text{Ray transmittance (\%)} = [\,x\ /\ (x+y)\,] \times 100$$

(4) Elution of ultraviolet-ray absorbing agent

Test plate A or B was autoclaved in distilled water at 121°C for 20 minutes. The ray transmittance of the autoclaved Test plate A or B was calculated in the same manner as in the above item (3). The ray transmittance of the autoclaved Test plate A or B was compared with the ray transmittance of Test plate A or B before autoclave, calculated in the above item (3). Then, the judgment whether the ultraviolet-ray absorbing agent eluted or not was given.

If the ultraviolet-ray absorbing agent does not elute, the ray transmittance is not lowered. On the other hand, if the ultraviolet-ray absorbing agent elutes, the ray transmittance is lowered.

**TABLE 2**

| | | Swelling solution | | CBDMP concentration (ppm) | Property of low water-containing soft contact lens | | | |
|---|---|---|---|---|---|---|---|---|
| Example No. | Test plate | Kind | Concentration (%) | | Linear swelling rate (%) | Absorption rate (%) | Ray transmittance (%) | Elution of ultraviolet-ray absorbing agent |
| 1 | A | 2-Propanol | 50 | 1000 | 1.09 | 30 | 22 | None |
| 2 | A | Methanol | 60 | 1000 | 1.05 | 16 | 2 | None |
| Com. Ex. No. 1 | A | Methanol | 60 | 0 | 1.06 | 16 | 47 | - |
| 3 | B | Methanol | 10 | 1000 | 1.04 | 12 | 40 | None |
| 4 | B | Methanol | 40 | 1000 | 1.08 | 26 | 10 | None |
| 5 | B | Methanol | 50 | 1000 | 1.09 | 30 | 10 | None |
| 6 | B | Methanol | 60 | 1000 | 1.10 | 33 | 4 | None |
| 7 | B | Methanol | 80 | 1000 | 1.13 | 44 | 5 | None |

From the results shown in TABLE 2, it can be seen that all ultraviolet-ray-absorbable and low water-containing soft contact lenses prepared by the process of the present invention in EXAMPLES 1 to 7 are more excellent in ultraviolet-ray absorbability than the lens material prepared without the ultraviolet-ray absorbing agent in COMPARATIVE EXAMPLE 1. In addition, it can been seen that as to all ultraviolet-ray-absorbable and low water-containing soft contact lenses in EXAMPLES 1 to 7, there is never elution of the ultraviolet-ray absorbing agent.

In addition to the ingredients used in the Examples, other ingredients can be used in the Examples as set forth in the specification to obtain substantially the same results.

A process for preparing an ultraviolet-ray-absorbable and low water-containing soft contact lens, characterized by immersing a low water-containing soft contact lens in a solution (I) prepared by dissolving an ultraviolet-ray absorbing agent in a swelling solvent, permeating the ultraviolet-ray absorbing agent to the inside of a swollen low water-containing soft contact lens, and then removing the swelling solvent used for swelling of the low water-containing soft contact lens. According to the process, the ultraviolet-ray absorbing agent can be physically captured to the inside of the contact lens to impart ultraviolet-ray absorbability to the contact lens without elution of ultraviolet-ray absorbing agent and the ultraviolet-ray-absorbable and low water-containing soft contact lens can be prepared without inhibition of polymerization.

## Claims

1. A process for preparing an ultraviolet-ray-absorbable and low water-containing soft contact lens, **characterized by** immersing a low water-containing soft contact lens in a solution (I) prepared by dissolving an ultraviolet-ray absorbing agent in a swelling solvent,
permeating the ultraviolet-ray absorbing agent to the inside of a swollen low water-containing soft contact lens, and then
removing the swelling solvent used for swelling of the low water-containing soft contact lens.

2. The process of Claim 1, wherein non-reacted monomers in the swollen low water-containing soft contact lens are extracted when the ultraviolet-ray absorbing agent permeates to the inside of the swollen low water-containing soft contact lens.

3. The process of Claim 1, wherein the ultraviolet-ray absorbing agent is a benzotriazole ultraviolet-ray absorbing agent.

4. The process of Claim 3, wherein the benzotriazole ultraviolet-ray absorbing agent is a compound represented by the formula (III):

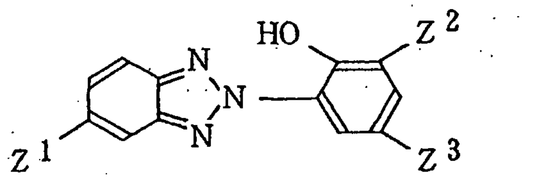

(III)

wherein $Z^1$ is hydrogen atom, a halogen atom, an alkyl group having 1 to 6 carbon atoms or an alkoxyl group having 1 to 6 carbon atoms, and each of $Z^2$ and $Z^3$ is independently hydrogen atom or an alkyl group having 1 to 6 carbon atoms.

5. The process of Claim 1, wherein the ultraviolet-ray absorbing agent is a compound having a molecular weight of 200 to 1200.

6. The process of Claim 1, wherein the concentration of the ultraviolet-ray absorbing agent in the solution (I) is 500 to 2000 ppm on the basis of weight.

7. The process of claim 1, wherein the swelling solvent is an alcohol solution.

8. The process of Claim 1, wherein the water content of the low water-containing soft contact lens is at most 15 % by weight.

9. The process of claim 1, wherein the low water-containing soft contact lens comprises a lens material of which

absorption rate for the swelling solvent is 12 to 50%.

10. The process of Claim 1, wherein the low water-containing soft contact lens comprises a vinyl acetate polymer.

**Patentansprüche**

1. Verfahren zur Herstellung einer Ultraviolettstrahlung absorbierenden und wasserarmen weichen Kontaktlinse, **dadurch gekennzeichnet, dass** eine wasserarme weiche Kontaktlinse in eine Lösung (I) eingetaucht wird, die durch Lösen eines Ultraviolettstrahlung absorbierenden Mittels in einem aufquellenden Lösungsmittel hergestellt wurde, das Ultraviolettstrahlung absorbierende Mittel veranlasst wird, ins Innere der aufgequollenen wasserarmen weichen Kontaktlinse einzudringen, und anschließend das zum Aufquellen der wasserarmen weichen Kontaktlinse verwendete aufquellende Lösungsmittel entfernt wird.

2. Verfahren nach Anspruch 1, **dadurch gekennzeichnet, dass** nicht-umgesetzte Monomere in der aufgequollenen wasserarmen weichen Kontaktlinse extrahiert werden, wenn das Ultraviolettstrahlung absorbierende Mittel ins Innere der aufgequollenen wasserarmen weichen Kontaktlinse eindringt.

3. Verfahren nach Anspruch 1, **dadurch gekennzeichnet, dass** das Ultraviolettstrahlung absorbierende Mittel ein Benzotriazol-UV-Absorptionsmittel ist.

4. Verfahren nach Anspruch 3, das Benzotriazol-UV-Absorptionsmittel eine Verbindung ist, die durch die nachstehende Formel (III) wiedergegeben wird:

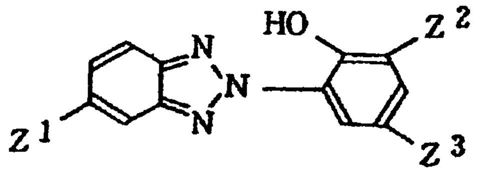

(III)

worin $Z^1$ ein Wasserstoffatom, ein Halogenatom, eine Alkylgruppe mit 1 bis 6 Kohlenstoffatomen oder eine Alkoxylgruppe mit 1 bis 6 Kohlenstoffatomen ist, und jedes $Z^2$ und $Z^3$ unabhängig ein Wasserstoffatom oder eine Alkylgruppe mit 1 bis 6 Kohlenstoffatomen ist.

5. Verfahren nach Anspruch 1, **dadurch gekennzeichnet, dass** das Ultraviolettstrahlung absorbierende Mittel eine Verbindung mit einem Molekulargewicht von 200 bis 1200 ist.

6. Verfahren nach Anspruch 1, **dadurch gekennzeichnet, dass** die Konzentration des Ultraviolettstrahlung absorbierenden Mittels in der Lösung (I) 500 bis 2000 ppm, bezogen auf das Gewicht, beträgt.

7. Verfahren nach Anspruch 1, **dadurch gekennzeichnet, dass** das aufquellende Lösungsmittel eine Alkohollösung ist.

8. Verfahren nach Anspruch 1, **dadurch gekennzeichnet, dass** der Wassergehalt der wasserarmen weichen Kontaktlinse höchstens 15 Gewichts-% beträgt.

**9.** Verfahren nach Anspruch 1,
**dadurch gekennzeichnet, dass**
die wasserarme weiche Kontaktlinse ein Linsenmaterial umfasst, dessen Absorptionsrate für das aufquellende Lösungsmittel 12 bis 50% beträgt,

**10.** Verfahren nach Anspruch 1,
**dadurch gekennzeichnet, dass**
die wasserarme weiche Kontaktlinse ein Vinylacetatpolymer umfasst.

## Revendications

**1.** Procédé de préparation d'une lentille de contact souple ayant l'aptitude d'absorber les rayons ultraviolets et ayant une faible teneur en eau, **caractérisé par**
l'immersion d'une lentille de contact souple à faible teneur en eau dans une solution (I) préparée en dissolvant un agent absorbant les rayons ultraviolets dans un solvant de gonflement,
la perméation de l'agent absorbant les rayons ultraviolets à l'intérieur d'une lentille de contact souple, à faible teneur en eau, gonflée, et ensuite par
la séparation du solvant de gonflement utilisé pour le gonflement de la lentille de contact souple à faible teneur en eau.

**2.** Procédé selon la revendication 1, dans lequel les monomères n'ayant pas réagi dans la lentille de contact souple, à faible teneur en eau, gonflée, sont extraits lorsque l'agent absorbant les rayons ultraviolets pénètre à l'intérieur de la lentille de contact souple, à faible teneur en eau, gonflée.

**3.** Procédé selon la revendication 1, dans lequel l'agent absorbant les rayons ultraviolets est un agent absorbant les rayons ultraviolets benzotriazole.

**4.** Procédé selon la revendication 3, dans lequel l'agent absorbant les rayons ultraviolets benzotriazole est un composé représenté par la formule (III) :

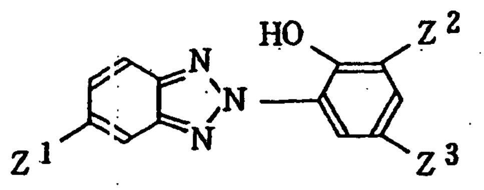

(III)

dans laquelle $Z^1$ est un atome d'hydrogène, un atome d'halogène, un groupe alkyle ayant de 1 à 6 atomes de carbone ou un groupe alcoxyle ayant de 1 à 6 atomes de carbone, et chacun de $Z^2$ et $Z^3$ est indépendamment un atome d'hydrogène ou un groupe alkyle ayant de 1 à 6 atomes de carbone.

**5.** Procédé selon la revendication 1, dans lequel l'agent absorbant les rayons ultraviolets est un composé ayant une masse moléculaire de 200 à 1200.

**6.** Procédé selon la revendication 1, dans lequel la concentration de l'agent absorbant les rayons ultraviolets, dans la solution (I), est de 500 à 2000 ppm en poids.

**7.** Procédé selon la revendication 1, dans lequel le solvant de gonflement est une solution d'alcool.

**8.** Procédé selon la revendication 1, dans lequel la teneur en eau de la lentille de contact souple à faible teneur en eau est au plus de 15 % en poids.

**9.** Procédé selon la revendication 1, dans lequel la lentille de contact souple à faible teneur en eau comprend un matériau de lentille dont le taux d'absorption pour le solvant de gonflement est de 12 à 50 %.

**10.** Procédé selon la revendication 1, dans lequel la lentille de contact souple à faible teneur en eau comprend un polymère d'acétate de vinyle.